# EUROPÄISCHE PATENTSCHRIFT

(11) **EP 1 915 813 B1**
(45) Veröffentlichungstag und Bekanntmachung des Hinweises auf die Patenterteilung: **02.08.2017**
(21) Anmeldenummer: 06777433.1
(22) Anmeldetag: 23.06.2006
(51) Int. Cl.: H02K 17/16

(54) **KÄFIGLÄUFER EINER ASYNCHRONMASCHINE**
CAGE ROTOR OF AN INDUCTION MOTOR
ROTOR A CAGE D'ECUREUIL D'UNE MACHINE ASYNCHRONE

(30) Priorität: 29.06.2005 DE 102005030377
(43) Veröffentlichungstag der Anmeldung: 30.04.2008
(73) Patentinhaber: Siemens Aktiengesellschaft, 80333 München (DE)
(72) Erfinder: VERHOEVEN, Daniel, 90425 Nürnberg (DE)
(86) Internationale Anmeldenummer: PCT/EP2006/063488
(87) Internationale Veröffentlichungsnummer: WO 2007/000413

(56) Entgegenhaltungen:
- EP-A- 0 786 855
- EP-A- 1 453 180
- EP-A1- 0 786 855
- DD-A- 10 154
- JP-A- H10 174 389
- JP-A- H10 322 990
- US-A- 5 719 457
- US-A- 5 719 457
- PATENT ABSTRACTS OF JAPAN Bd. 1999, Nr. 03, 31. März 1999 (1999-03-31) -& JP 10 322990 A (HITACHI LTD), 4. Dezember 1998 (1998-12-04)
- PATENT ABSTRACTS OF JAPAN Bd. 1998, Nr. 11, 30. September 1998 (1998-09-30) -& JP 10 174389 A (HITACHI LTD), 26. Juni 1998 (1998-06-26)
- PATENT ABSTRACTS OF JAPAN Bd. 2000, Nr. 04, 31. August 2000 (2000-08-31) -& JP 2000 014105 A (TOSHIBA CORP), 14. Januar 2000 (2000-01-14) in der Anmeldung erwähnt

## Beschreibung

Die Erfindung betrifft eine Asynchronmaschine mit einem Ständer und einem Käfigläufer, wobei der Käfigläufer eine Welle und ein Blechpaket aufweist und sich in dem Blechpaket Läuferstäbe befinden, welche an beiden Enden des Blechpakets durch die Durchbrüche je einer Endplatte geführt sind und mit einem Kurzschlussring abgeschlossen sind, welcher die Enden der Läuferstäbe einer Seite des Käfigläufers elektrisch leitend verbindet.

Elektrische Maschinen werden in sehr vielen technischen Bereichen verwendet. Bei elektrischen Maschinen ist zu unterscheiden zwischen Gleichstrommaschinen, Wechselstrommaschinen und Drehstrommaschinen. Drehstrommaschinen können unterteilt werden in Drehstrom-Synchronmaschinen und Drehstrom-Asynchronmaschinen.

Alle diese elektrischen Maschinen enthalten u. a. einen ruhenden Ständer und einen drehbar gelagerten Läufer. Der Läufer ist je nach Bauform mit einem Wicklungssystem bestückt. Dieses Wicklungssystem kann aus einer oder mehreren Drahtwicklungen oder Stabwicklungen bestehen. Aus Drahtwicklungen oder auch Stabwicklungen können auch Käfigwicklungen konstruiert werden. Im Fall von Stäben und Kurzschlusswicklungen bei Asynchronmotoren ergeben sich Käfigläufer. In diesem Fall enthält das Blechpaket des Läufers Läuferstäbe, welche an ihren Enden mittels Kurzschlussringen leitend miteinander verbunden werden.

Es ist bekannt, dass der Übergangsbereich der Läuferstäbe zu den Kurzschlussringen bei Erwärmung des Läufers während des Betriebs einer Scherbeanspruchung ausgesetzt ist, so dass es zum Bruch der Verbindungsstelle kommen kann. Dies liegt vor allem an der unterschiedlichen Ausdehnung des Läuferblechpakets und der Kurzschlussringe bei Erwärmung sowie an Zentrifugalkräften während des Betriebs. In der Schrift JP 2000-014105-A wird daher vorgeschlagen, die Enden der Läuferstäbe und die Kurzschlussringe verstärkt auszuführen, so dass die Läuferstäbe und die Kurzschlussringe eine größere gemeinsame Querschnittsfläche besitzen. Weiterhin ist aus der Schrift EP 1 453 180 A2 auch bekannt, die Läuferstäbe auf jeder Seite durch eine Endplatte zu führen, bevor der Kurzschlussring angeschlossen wird.

Nachteilig ist aber, dass die Gefahr eines Bruchs einer Verbindung zwischen einem Läuferstab und einem Kurschlussring zwar verringert wird, ein Bruch aber dennoch vorkommen kann. Der Erfindung liegt deshalb die Aufgabe zugrunde, eine Asynchronmaschine mit einem Käfigläufer zu schaffen, bei dem ein Bruch der Verbindung zwischen einem Läuferstab und einem Kurzschlussring vermieden wird.

Diese Aufgabe wird erfindungsgemäß dadurch gelöst, dass jede Endplatte einen umlaufenden Vorsprung aufweist, welcher den Kurzschlussring an dessen Außenseite zumindest teilweise formschlüssig abdeckt.

Damit wird vorteilhaft erreicht, dass jeder Kurzschlussring an seiner Außenseite von einer Endplatte gehalten und eingefasst wird, wodurch sich der Kurzschlussring bei Erwärmung während des Betriebs nicht zu stark ausdehnen kann und eine Scherbeanspruchung und ein Bruch des Übergangsbereichs der Läuferstäbe zu den Kurzschlussringen verhindert wird. Weiterhin wird der Kurzschlussring auch bei hohen Drehzahlen und hohen Zentrifugalkräften sicher an seinem Platz gehalten. Die Ausgestaltung umfasst weiterhin, dass die Läuferstäbe an ihren Enden eine Verdickung mit einem vergrößerten Stabquerschnitt aufweisen, wobei die Verdickung der Läuferstäbe in der Endplatte liegt. Damit ist der Übergangsbereich der Läuferstäbe zu den Kurzschlussringen noch besser und stabiler ausgeführt und die Gefahr eines Bruchs wird nochmals reduziert.

Weiterhin wird der Übergang zwischen Verdickung und Kurzschlussring in Form einer Rundung mit einem Übergangsradius ausgebildet. Dies beseitigt bruchgefährdete Eckstellen, bei denen besonders große Scherbeanspruchungen auftreten.

Um die Verdickungen besser auf dem Kreisquerschnitt anzuordnen, können diese auch leicht versetzt zu den Läuferstäben angeordnet werden. Damit wird z.B. vorteilhaft erreicht, dass eine Verdickung nicht über den Rand des Käfigläufers herausragt.

Die Anzahl der Durchbrüche einer Endplatte kann gleich der Anzahl der Läuferstäbe sein oder auch kleiner. Im ersten Fall wird eine besonders präzise und sichere Führung der Läuferstäbe erreicht, so dass die Läuferstäbe durch die Endplatte vor Bruch geschützt werden. Im zweiten Fall werden mehrere Läuferstäbe durch eine Öffnung in der Endplatte geführt, was besonders vorteilhaft ist, wenn die Endplatte einfach und billig gefertigt werden soll.

Eine weitere vorteilhafte Ausgestaltung ergibt sich, wenn jede Endplatte einen weiteren umlaufenden Vorsprung aufweist, welcher den Kurzschlussring an dessen Innenseite zumindest teilweise formschlüssig abdeckt. Damit ist also nicht nur die Außenseite des Kurzschlussrings durch die Endplatte abgestützt, sondern auch die Innenseite. Diese Führung dient u. a. auch dem Schutz des Kurzschlussringes vor mechanischen Beschädigungen.

Darüber hinaus können die Übergangsstellen im Profil der Läuferstäbe und/oder der Kurzschlussringe im durch eine Endplatte eingefassten Bereich in Form einer Rundung mit einem Übergangsradius ausgebildet werden. Dies vermeidet bruchgefährdete Eckstellen und erhöht somit die Festigkeit und Zuverlässigkeit des Käfigläufers.

Die Endplatte wird vorteilhafter Weise so ausgebildet, dass sie im Bereich der Anbindung zur Welle eine vergleichsweise geringe Materialstärke aufweist oder eine so große mittige Öffnung aufweist, so dass die Welle nicht berührt wird. Durch beide alternativen Maßnahmen wird Material eingespart und das Trägheitsmoment des Käfigläufers reduziert.

Vorteilhafter Weise werden die Läuferstäbe und die Kurzschlussringe aus einem gut elektrisch leitenden Material wie Kupfer oder Aluminium aus einem Teil gefertigt, bzw. als ein Teil gegossen.

Weiterhin ist denkbar, an der den Läuferstäben abgewandte Seite des Kurzschlussringes radial nach außen laufende und/oder tangential verlaufende Rillen vorzusehen, so dass eine vorteilhafte Kühlung des Kurzschlussringes besonders während des Betriebs der Asynchronmaschine eintritt.

Die Erfindung sowie weitere vorteilhafte Ausgestaltungen der Erfindung gemäß den Merkmalen der Unteransprüche werden im folgenden anhand von schematisch dargestellten Ausführungsbeispielen in der Zeichnung näher erläutert, ohne dass dadurch eine Beschränkung der Erfindung auf dieses Ausführungsbeispiel erfolgt; es zeigen:
- FIG 1: einen Teil eines Käfigläufers nach dem Stand der Technik;
- FIG 2: einen Teil eines erfindungsgemäßen Käfigläufers;
- FIG 3: einen Teil eines weiteren erfindungsgemäßen Käfigläufers;
- FIG 4: einen Teil des erfindungsgemäßen Käfigläufers von FIG 3;
- FIG 5: einen Teil eines weiteren erfindungsgemäßen Käfigläufers;
- FIG 6: einen Teil des erfindungsgemäßen Käfigläufers von FIG 5;
- FIG 7: einen Teil eines weiteren erfindungsgemäßen Käfigläufers;
- FIG 8: einen Teil des erfindungsgemäßen Käfigläufers von FIG 7;
- FIG 9: einen Teil eines weiteren erfindungsgemäßen Käfigläufers;
- FIG 10: einen Teil des erfindungsgemäßen Käfigläufers von FIG 9;
- FIG 11: einen Teil eines weiteren erfindungsgemäßen Käfigläufers;
- FIG 12: einen Teil des erfindungsgemäßen Käfigläufers von FIG 11;
- FIG 13: eine beispielhafte Asynchronmaschine.

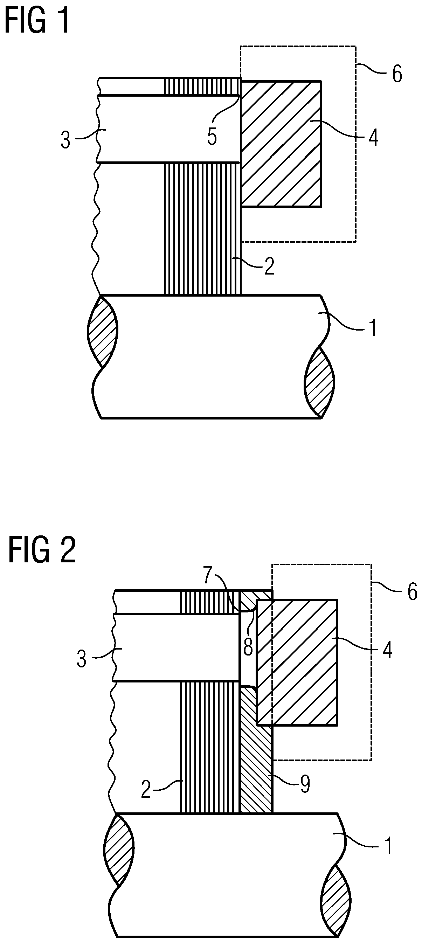

In FIG 1 ist ein Teil eines Käfigläufers nach dem Stand der Technik dargestellt. Bei drehenden elektrischen Maschinen, die nach dem Induktionsprinzip arbeiten, werden die Kurzschlusswicklungen im Läufer aus elektrisch gut leitendem Material - vorzugsweise Kupfer oder Aluminium - ausgeführt. Diese Kurzschlusswicklung besteht zum einen aus einer bestimmten Anzahl von Läuferstäben 3 mit definiertem Querschnitt, die im Läuferblechpaket 2 eingebettet sind. Zum anderen befindet sich an den Stirnseiten des Blechpaketes jeweils ein Kurzschlussring 4, der alle Läuferstäbe 3 der entsprechenden Läuferseite miteinander verbindet, d.h. diese elektrisch kurzschließt. Derzeit werden Läuferwicklungen aus Aluminium i.a. im Druckgussverfahren hergestellt.

In FIG 1 ist gezeigt, dass das Blechpaket 2 sich beim Gießen zwischen zwei stirnseitig angeordneten Druckgussformen 6 befindet, so dass sich eine Formkavität ergibt, die aus den Läuferstäben 3 im Blechpaket 2 sowie den Kurzschlussringen 4 besteht und die vollständig mit Aluminium gefüllt wird. Diese grundsätzliche Anordnung gilt auch für andere Gießwerkstoffe. Der Kurzschlussring 4 hat einen erheblich größeren Querschnitt als die einzelnen Läuferstäbe 3, wobei sich in der Darstellung nach FIG 1 ein scharfkantiger Übergang 5 zwischen diesen beiden Querschnitten ergibt. Beim Betrieb der Maschine wird diese Struktur mechanisch und thermisch beansprucht. Das Blechpaket 2 ist auf der Welle 1 angebracht.

Im Allgemeinen wird die Maschine mit veränderlichen Drehzahlen und Belastungen gefahren, so dass diese Beanspruchungen dynamisch werden. Auf den Kurzschlussring 4 wirken wegen des relativ großen Volumens vergleichsweise große Zentrifugalkräfte. Bei der Verwendung von Aluminium ist zusätzlich zu berücksichtigen, dass der Wärmausdehnungskoeffizient dieses Materials etwa doppelt so hoch wie der von Stahl, d.h. unter der belastungsbedingten Temperaturentwicklung im Läufer wächst der Kurzschlussring 4 stärker als das Blechpaket 2. Diese beiden Effekte führen zu einer radialen Verlagerung des Kurzschlussringes nach außen. Die Läuferstäbe 3 können dieser Bewegung durch die Einbettung in das Blechpaket 2 nicht ungehindert nachfolgen, was durch die Scherbeanspruchung an der Kerbstelle 5 zu unzulässig hohen Spannungen und zum Bruch der Verbindung der Läuferstäbe 3 und Kurzschlussringe 4 führen kann. Besonders bei Kurzschlusswicklungen aus Aluminium schränkt dieser Effekt den Anwendungsbereich der Läufer hinsichtlich der Betriebsbedingungen der elektrischen Maschine (Drehzahl, Belastung) stark ein

FIG 2 zeigt einen Teil eines erfindungsgemäßen Käfigläufers. Bei dem erfindungsgemäßen Käfigläufer wird die hohe Scherbeanspruchung an der Verbindungsstelle zwischen Läuferstäben 3 und Kurzschlussringen 4 unmittelbar unterdrückt. Die massive Endplatte 9 enthält einen beliebigen Teil des Kurzschlussring-Querschnittes und optional einen vergrößerten Stabquerschnitt 7 oder einen Übergangsradius 8 oder beides. Somit wird der Kurzschlussring 4 an der gefährdeten Übergangsstelle daran gehindert, sich radial nach außen zu bewegen und abzubrechen.

Die Endplatte 9 enthält somit einen Teil des Läuferstabes 3 und einen Teil des Kurzschlussringes 4. Mit dieser Maßnahme ist der gefährdete Übergang von einem Läuferstab 3 auf einen Kurzschlussring 4 vollständig durch höherfestes Material armiert. Der Vorteil ist, dass nur ein Bauelement verwendet werden muss und dem Gießen nachgelagerte Armierungen des Kurzschlussringes entfallen können. Dadurch wird auf einfache Weise der Betriebsbereich von gegossenen Läufern hinsichtlich Drehzahl- und Temperaturbeanspruchung erweitert.

Alternativ wird die Läuferwicklung nicht im Gießverfahren hergestellt sondern aus Halbzeugen (Stäbe und Ringe) - vorzugsweise aus Kupfer - ausgeführt und somit höhere Beanspruchungen ermöglicht.

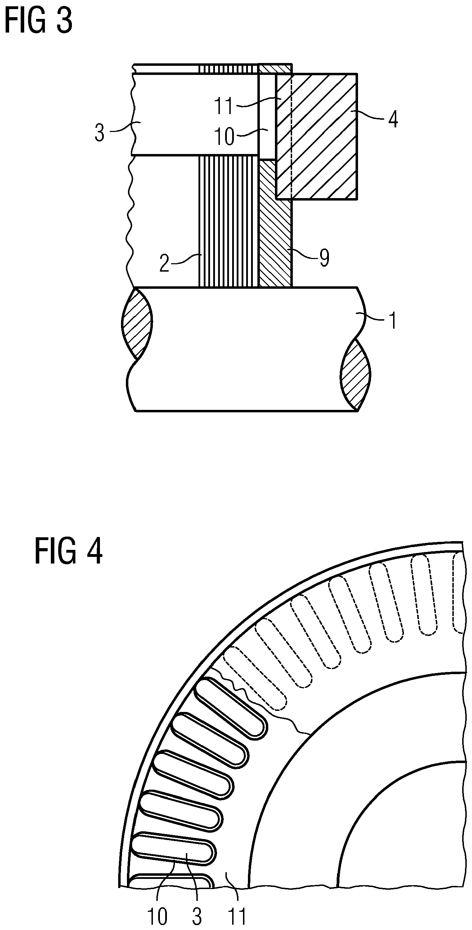

In FIG 3 zeigt einen Teil eines weiteren erfindungsgemäßen Käfigläufers. In FIG 3 enthält die Endplatte 9 für jeden Läuferstab 3 eine Öffnung 10, die nicht genau dem Querschnitt des Läuferstabes entsprechen muss und auch prinzipiell in der radialen Position anders angeordnet werden kann, so lange der daraus resultierende Querschnittsübergang sowohl fertigungstechnisch als auch von den Betriebskenndaten der elektrischen Maschine vertretbar bleibt. Außerdem enthält die Endplatte 9 den erfindungsgemäßen Anteil des Kurzschlussringes 11 in rotationssymmetrischer Form. Es ist auch möglich, mehrere Läuferstäbe 3 in einer Öffnung 10 in der Endplatte 9 zusammenzufassen. FIG 4 zeigt einen Teil des erfindungsgemäßen Käfigläufers von FIG 3 aus einem anderen Sichtwinkel.

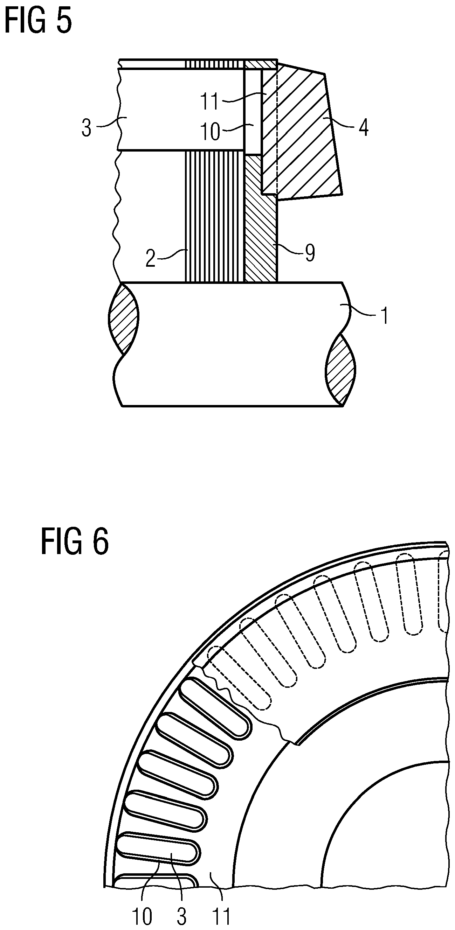

FIG 5 ähnelt FIG 3, nur ist der außerhalb der Endplatte 9 liegende Teil des Kurzschlussringes 4 mit beliebigem Querschnitt gestaltet. FIG 6 zeigt einen Teil des erfindungsgemäßen Käfigläufers von FIG 5 aus einem anderen Sichtwinkel.

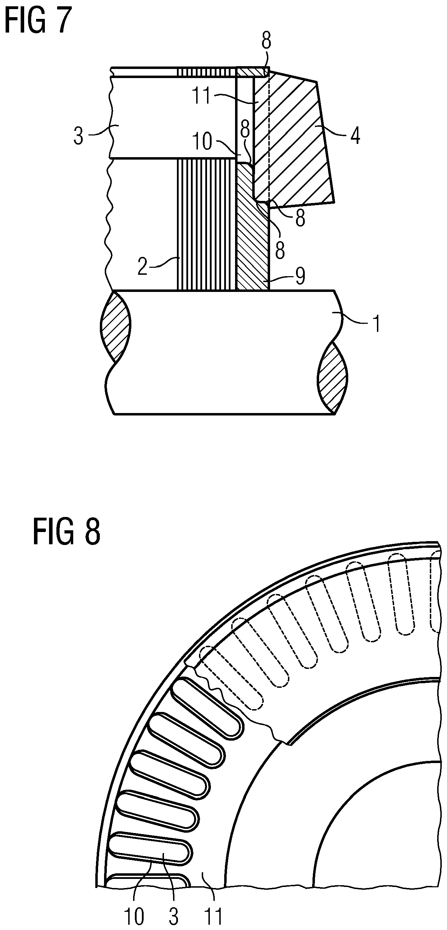

Als weitere Ausgestaltung zeigt FIG 7 eine Endplatte 9, die an einer oder mehreren möglichen Stellen Übergangsradien 8 besitzt. FIG 8 zeigt einen Teil des erfindungsgemäßen Käfigläufers von FIG 7 aus einem anderen Sichtwinkel.

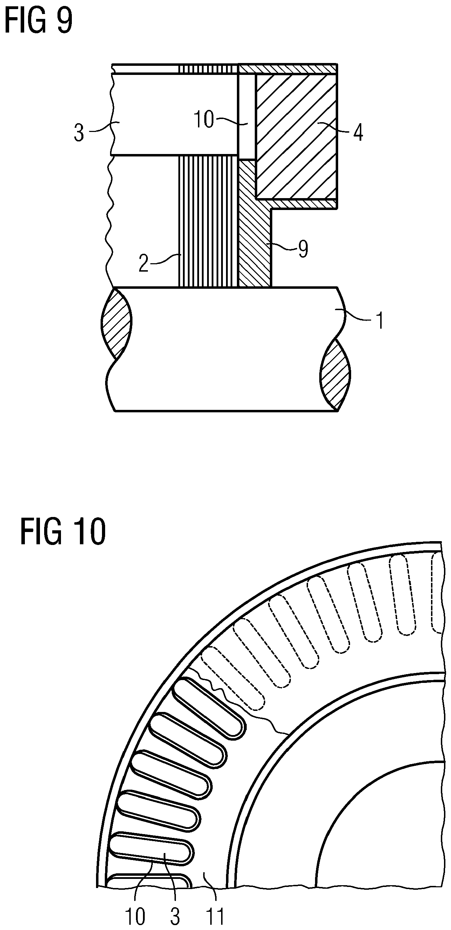

In FIG 9 ist eine weitere erfindungsgemäße Ausführung dargestellt, wobei sich hier der vollständige Querschnitt des Kurzschlussringes 4 innerhalb der Endplatte 9 befindet. FIG 10 zeigt einen Teil des erfindungsgemäßen Käfigläufers von FIG 9 aus einem anderen Sichtwinkel.

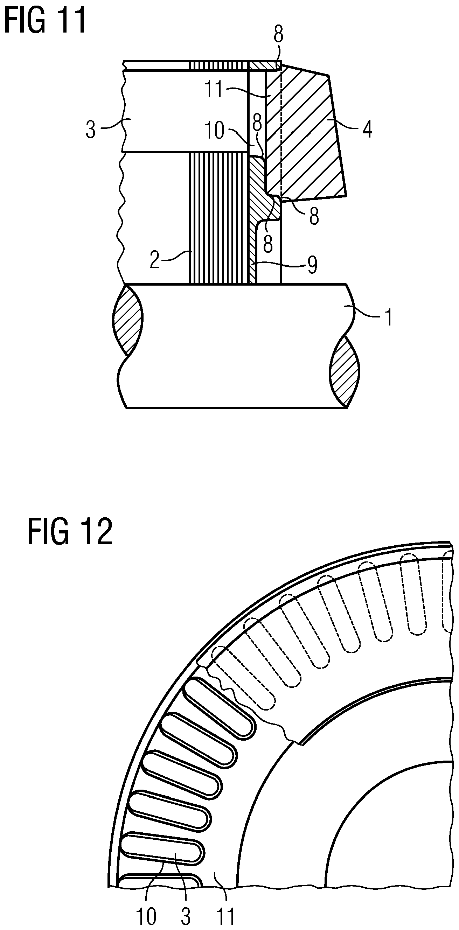

Als weitere Detaillierung zeigt FIG 11 eine Ausführung, in der die Endplatte 9 im Bereich der Anbindung zur Welle 1 in der Materialstärke reduziert wird, bzw. auf eine Anbindung vollständig verzichtet wird. Weiterhin ist denkbar, an der den Läuferstäben 3 abgewandte Seite des Kurzschlussringes 4 radial nach außen laufende oder/und tangential verlaufende Rillen vorzusehen, so dass eine Kühlung des Kurzschlussringes 4 während des Betriebs der Asynchronmaschine eintritt. FIG 12 zeigt einen Teil des erfindungsgemäßen Käfigläufers von FIG 11 aus einem anderen Sichtwinkel.

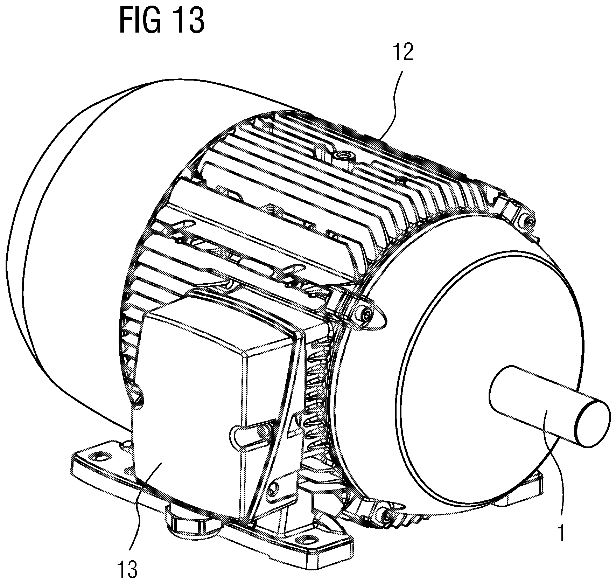

FIG 13 zeigt eine beispielhafte Asynchronmaschine mit einem Gehäuse 12 und einem Anschlusskasten 13.

## Patentansprüche

1. Asynchronmaschine mit einem Ständer und einem Käfigläufer, wobei der Käfigläufer eine Welle (1) und ein Blechpaket (2) aufweist und sich in dem Blechpaket Läuferstäbe (3) befinden, welche an beiden Enden des Blechpakets (2) durch die Öffnungen (10) je einer Endplatte (9) geführt sind und mit einem Kurzschlussring (4) abgeschlossen sind, welcher die Enden der Läuferstäbe (3) einer Seite des Käfigläufers elektrisch leitend verbindet, **wobei jede Endplatte (9) einen Teil der Läuferstäbe (3) und einen Teil eines Kurzschlussrings (4) enthält, und wobei** jede Endplatte (9) einen umlaufenden Vorsprung aufweist, welcher zumindest teilweise an der Außenseite des Kurzschlussrings (4) formschlüssig anliegt, **dadurch gekennzeichnet,**
**dass die Endplatten (9) massiv ausgeführt sind und höherfestes Material gegenüber den Läuferstäben (3) und den Kurzschlussringen (4) aufweisen,**
**dass die Läuferstäbe (3) an ihren Enden eine Verdickung mit einem vergrößerten Stabquerschnitt (7) aufweisen, wobei zumindert ein Teil der Verdickung der Läuferstäbe (3) in den Öffnungen (10) der Endplatten (9) liegt und**
**dass der Übergang zwischen Verdickung und Kurzschlussring** (4) **in Form einer Rundung mit einem Übergangsradius (8) ausgebildet ist.**

2. **Asynchronmaschine** nach **Anspruch 1,**
**dadurch gekennzeichnet, dass** die Anzahl der Öffnungen (10) einer Endplatte (9) gleich der Anzahl der Läuferstäbe (3) ist.

3. Asynchronmaschine nach **Anspruch 1 oder 2,**
**dadurch gekennzeichnet, dass** die Anzahl der Öffnungen (10) einer Endplatte (9) kleiner als die Anzahl der Läuferstäbe (3) ist, so dass mehrere Läuferstäbe (3) durch eine Öffnung (10) geführt werden.

4. **Asynchronmaschine** nach einem oder mehreren der Ansprüche 1 bis **3**,
**dadurch gekennzeichnet, dass** jede Endplatte (9) einen weiteren umlaufenden Vorsprung aufweist, welcher zumindest teilweise an der Innenseite des Kurzschlussrings (4) formschlüssig anliegt.

5. **Asynchronmaschine** nach einem oder mehreren der Ansprüche 1 bis **4**,
**dadurch gekennzeichnet, dass** Übergangsstellen im Profil der Läuferstäbe (3) und/oder der Kurzschlussringe (4) im durch eine Endplatte (9) eingefassten Bereich in Form einer Rundung mit einem vorgebbaren Übergangsradius (8) ausgebildet ist.

6. **Asynchronmaschine** nach einem oder mehreren der Ansprüche 1 bis **5**,
**dadurch gekennzeichnet, dass** die Endplatte (9) im Bereich der Welle (1) eine vergleichsweise geringe Materialstärke aufweist oder eine so große mittige Öffnung aufweist, so dass sie die Welle (1) nicht berührt.

7. **Asynchronmaschine** nach einem oder mehreren der Ansprüche 1 bis 6,
**dadurch gekennzeichnet, dass** die Läuferstäbe (3) und die Kurzschlussringe (4) aus Kupfer oder Aluminium gefertigt sind.

8. **Asynchronmaschine** nach einem oder mehreren der Ansprüche 1 bis **7**,
**dadurch gekennzeichnet, dass** die Läuferstäbe (3) und die Kurzschlussringe (4) als ein Stück im Druckguß gegossen sind.

9. **Asynchronmaschine** nach einem oder mehreren der Ansprüche 1 bis **8**,
**dadurch gekennzeichnet, dass** der Kurzschlussring (4) an der den Läuferstäben (3) abgewandten Seite radial nach außen laufende und/oder tangential verlaufende Rillen aufweist, so dass eine Kühlung des Kurzschlussringes (4) besonders während des Betriebs der Asynchronmaschine eintritt.

## Claims

1. Asynchronous machine with a stator and a squirrel-cage rotor, the squirrel-cage rotor having a shaft (1) and a laminate stack (2), and rotor bars (3) being located in the laminate stack, which rotor bars are guided at both ends of the laminate stack (2) through the openings (10) of in each case one end plate (9) and are terminated with a short-circuiting ring (4), which electrically conductively connects the ends of the rotor bars (3) of one side of the squirrel-cage rotor, each end plate (9) containing part of the rotor bars (3) and part of a short-circuiting ring (4), and each end plate (9) having a peripheral projection, which bears at least partially against the outer side of the short-circuiting ring (4), **characterized**
**in that** the end plates (9) are designed to be solid and have a higher-strength material than the rotor bars (3) and the short-circuiting rings (4),
**in that** the rotor bars (3) have a thickened portion with an enlarged bar cross section (7) at their ends, at least part of the thickened portion of the rotor bars (3) lying in the openings (10) of the end plate (9), and
**in that** the transition between the thickened portion and the short-circuiting ring (4) is in the form of a rounded portion with a transition radius (8).

2. Asynchronous machine according to Claim 1,
**characterized in that** the number of openings (10) of an end plate (9) is equal to the number of rotor bars (3).

3. Asynchronous machine according to Claim 1 or 2,
**characterized in that** the number of openings (10) of an end plate (9) is smaller than the number of rotor bars (3), so that a plurality of rotor bars (3) are guided through one opening (10).

4. Asynchronous machine according to one or more of Claims 1 to 3,
**characterized in that** each end plate (9) has a further peripheral projection, which bears at least partially against the inner side of the short-circuiting ring (4) in an interlocking manner.

5. Asynchronous machine according to one or more of Claims 1 to 4,
**characterized in that** transition points in the profile of the rotor bars (3) and/or the short-circuiting rings (4) in the region clamped in by an end plate (9) are in the form of a rounded portion with a predeterminable transition radius (8).

6. Asynchronous machine according to one or more of Claims 1 to 5,
**characterized in that** the end plate (9) has, in the region of the shaft (1), a comparatively small material thickness or such a large central opening that it does not touch the shaft (1).

7. Asynchronous machine according to one or more of Claims 1 to 6,
**characterized in that** the rotor bars (3) and the short-circuiting rings (4) are manufactured from copper or aluminium.

8. Asynchronous machine according to one or more of Claims 1 to 7,
**characterized in that** the rotor bars (3) and the short-circuiting rings (4) are cast as one piece using diecasting.

9. Asynchronous machine according to one or more of Claims 1 to 8, **characterized in that** the short-circuiting ring (4) has, on the side facing away from the rotor bars (3), radially outwardly running and/or tangentially running grooves, so that cooling of the short-circuiting ring (4) occurs particularly during operation of the asynchronous machine.

## Revendications

1. Machine asynchrone comprenant un stator et un rotor à cage d'écureuil, le rotor à cage d'écureuil ayant un arbre ( 1 ) et un paquet ( 2 ) de tôles et il se trouve, dans le paquet de tôles, des barreaux ( 3 ) de rotor, qui, aux deux extrémités du paquet ( 2 ) de tôles, passent par les ouvertures ( 10 ) de respectivement une plaque ( 9 ) d'extrémité et sont fermés par un anneau ( 4 ) de court-circuit, qui relie, d'une manière conductrice de l'électricité, les extrémités des barreaux ( 3 ) du rotor d'un côté du rotor à cage d'écureuil, chaque plaque ( 9 ) d'extrémité contenant une partie des barreaux ( 3 ) du rotor et une partie d'un anneau ( 4 ) de court-circuit et dans laquelle chaque plaque ( 9 ) d'extrémité a une saillie faisant le tour, qui s'applique, à complémentarité de forme, au moins en partie, au côté extérieur de l'anneau ( 4 ) de court-circuit,
**caractérisée**
**en ce que** les plaques ( 9 ) d'extrémité sont réalisées pleines et ont un matériau plus solide que les barreaux ( 3 ) du rotor et que les anneaux ( 4 ) de court-circuit,
**en ce que** les barreaux ( 3 ) du rotor ont, à leur extrémité, un épaississement, ayant une section ( 7 ) transversale de barreaux agrandie, au moins une partie de l'épaississement des barreaux ( 3 ) du rotor se trouvant dans les ouvertures ( 10 ) des plaques ( 9 ) d'extrémité et
**en ce que** la transition, entre l'épaississement et l'anneau ( 4 ) de court-circuit, est constituée sous la forme d'un arrondi ayant un rayon ( 8 ) de transition.

2. Machine asynchrone suivant la revendication 1,
**caractérisée en ce que** le nombre des ouvertures ( 10 ) d'une plaque ( 9 ) d'extrémité est égal au nombre des barreaux ( 3 ) du rotor.

3. Machine asynchrone suivant la revendication 1 ou 2,
**caractérisée en ce que** le nombre des ouvertures ( 10 ) d'une plaque ( 9 ) d'extrémité est plus petit que le nombre des barreaux ( 3 ) du rotor, de sorte que plusieurs barreaux ( 3 ) du rotor passent dans une ouverture ( 10 ).

4. Machine asynchrone suivant l'une ou plusieurs des revendications 1 à 3,
**caractérisée en ce que** chaque plaque ( 3 ) d'extrémité a une autre saillie faisant le tour, qui s'applique, à complémentarité de forme, au moins en partie, au côté intérieur de l'anneau ( 4 ) de court circuit.

5. Machine asynchrone suivant l'une ou plusieurs des revendications 1 à 4,
**caractérisée en ce qu'**il est constitué, sous la forme d'un arrondi ayant un rayon ( 8 ) de transition pouvant être donné à l'avance, des points de transition dans le profil des barreaux ( 3 ) du rotor et/ou des anneaux ( 4 ) de court-circuit, dans la partie bordée par une plaque ( 9 ) d'extrémité.

6. Machine asynchrone suivant l'une ou plusieurs des revendications 1 à 5,
**caractérisée en ce que** la plaque ( 9 ) d'extrémité a, dans la partie de l'arbre ( 1 ), une épaisseur de matériau relativement petite ou a une ouverture au milieu si grande qu'elle ne touche pas l'arbre ( 1 ).

7. Machine asynchrone suivant l'une ou plusieurs revendications 1 à 6,
**caractérisée en ce que** les barreaux ( 3 ) du rotor et les anneaux ( 4 ) de court-circuit sont en cuivre ou en aluminium.

8. Machine asynchrone suivant l'une ou plusieurs des revendications 1 à 7,
**caractérisée en ce que** les barreaux ( 3 ) du rotor et les anneaux ( 4 ) de court-circuit sont coulés en une pièce par coulée sous pression.

9. Machine asynchrone suivant l'une ou plusieurs des revendications 1 à 8,
**caractérisée en ce que** l'anneau ( 4 ) de court-circuit a, du côté éloigné des barreaux ( 3 ) du rotor, des rainures s'étendant radialement vers l'extérieur et/ou s'étendant tangentiellement, de manière à produire un refroidissement de l'anneau ( 4 ) de court-circuit, notamment pendant le fonctionnement de la machine asynchrone.
